# EUROPEAN PATENT SPECIFICATION

(11) **EP 1 362 903 B1**
(45) Date of publication and mention of the grant of the patent: **08.07.2015**
(21) Application number: 01970319.8
(22) Date of filing: 01.10.2001
(51) Int. Cl.: C09K 3/10, B29C 44/56

(54) **SEAL MATERIAL**
DICHTUNGSMATERIAL
MATÉRIAU D'ÉTANCHÉITÉ

(30) Priority: 19.02.2001 JP 2001042006
(43) Date of publication of application: 19.11.2003
(73) Proprietor: Bridgestone Corporation, Tokyo 104-8340 (JP)
(72) Inventor: SEKI, Katsuya, Yokohama-shi, Kanagawa 244-0003 (JP); GOTO, Hideo, Yokosuka-shi, Kanagawa 237-0072 (JP); SAITO, Shinji, Ohta-ku, Tokyo 144-0052 (JP)
(74) Representative: Quintelier, Claude
(86) International application number: PCT/JP2001/008644
(87) International publication number: WO 2002/066573

(56) References cited:
- EP-A- 0 945 241
- JP-A- 6 330 022
- JP-A- 7 109 369
- JP-A- 10 086 255
- JP-A- 10 109 372
- JP-A- 10 114 005
- JP-A- 2001 026 057
- JP-A- 2001 114 926
- JP-A- 2001 311 070
- US-A- 5 705 115

## Description

### FIELD OF THE INVENTION

The present invention relates to a sealing member to be interposed between parts for sealing the parts and, more particularly, to a sealing member made of rubber foam.

### RELATED ART

In housing exterior panels, electrical appliances such as air conditioners, or motor cars, sealing members made of synthetic resin foam or rubber foam are used for sealing various portions. For example, sealing members of this type are widely used for sealing parts, such as a back of a wall-mounted type unit of an air conditioner, a periphery of a ceiling-mounted built-in type unit of an air conditioner, a casing for an outdoor unit of an air conditioner, a front panel door for a vending machine, a back of a refrigerator, and a CD-ROM device. In addition, such sealing members are used for sealing parts in a motor car, such as a wind dam (air dam), a periphery of a sunroof, a door speaker box, a mounting portion for an outside mirror, and a cowl top seal. Such sealing members are also used for sealing parts in a house, such as roof tiles, a periphery of a sash, a periphery of a shutter, a joint for exterior panels, and a joint for metal roof plates.

The sealing members are generally made of synthetic resin foam or rubber foam, for example urethane foam or sponge rubber foam.

Though cells of the foam are mainly closed cells, the closed cells have disadvantages such as poor dimensional stability.

Therefore, the sealing members are previously processed by roll crushing, vacuum crushing, or impact crushing to create micro cracks so as to break a part of the closed cells (see US 5 705 115), thereby providing desired permeability and thus improving the dimensional stability.

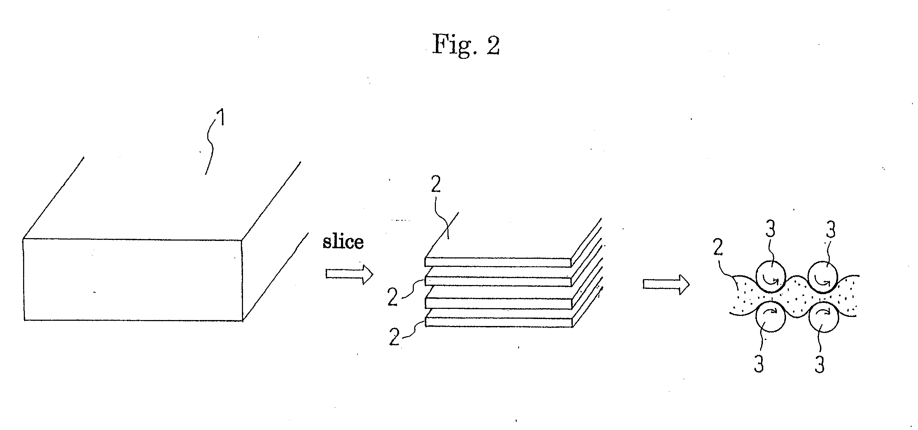

Fig. 2 is a schematic view for explaining a conventional example of manufacturing process in which sealing members are pressed by pairs of rolls. As shown, a foam body 1 is sliced into a plurality of thin plates 2 and the respective thin plates 2 are pressed in the thickness direction between the pairs of rolls 3, 3, thereby manufacturing the sealing members having desired permeability.

The above conventional sealing member has the following disadvantages:
i) In case of pressing process by means of the aforementioned roll crushing, pressure is applied in the thickness direction of the sealing member so that cells are easy to be broken in a direction perpendicular to the thickness direction of the sealing member. Normally, the sealing member is interposed between parts in such a manner that the sealing member is compressed in its thickness direction in order to block the flow of air or water in a direction perpendicular to the direction of compressing the sealing member. Therefore, a large number of broken cells in the direction perpendicular to the thickness direction lead to reduction in air blocking property and/or water blocking property of the sealing member.
   It should be noted that the compressing direction will be sometimes referred to as "vertical direction" and the direction perpendicular to the compressing direction will be sometimes referred to as "lateral direction".
ii) When the sealing member is compressed, air within the sealing member flows out through micro cracks produced during breaking cells, so as to reduce the thickness of the sealing member. Then, as the compressive force is cancelled, air flows into the sealing member through the micro cracks so as to restore the thickness of the sealing member.
   However, a large number of micro cracks extend in the lateral direction in the sealing member having a large number of broken cells in the lateral direction, so that air flows in the lateral direction within the sealing member. Since the air flow paths have great lateral length, the speed of air flowing into or out of the sealing member is slowed down and, therefore, deformation in thickness of the sealing member is also slowed down. That is, the rate of elastic deformation of the sealing member according to the external force is reduced.
iii) As the amount of micro cracks in the vertical direction is increased, air also flows into or out of the sealing member in the vertical direction, thereby increasing the rate of elastic deformation of the sealing member. When the air permeability in the vertical direction of the sealing member is increased by compressing the sealing member according to a conventional method such as roll crushing, broken cells in the lateral direction are correspondingly increased. In this case, there is a possibility of lack of properties of the sealing member such as sound absorption and impact absorption and air tightness. In addition, it is difficult to set the vertical/lateral ratio to be 1.
iv) In many cases, sound absorbing members, airtight members, and water-proof members are applied by sticking. During this, it is difficult to stick such members if it has too low air permeability in the vertical direction. JP 10 086255 A discloses a synthetic resin foam for heat insulation with needle apertures on the whole surface formed by punching the foam surface with a roller with needles. EP 0 945 241 A discloses a synthetic resin foam sealing material having 16 gas permeating holes per square centimeter. JP 2001 114926 A discloses a closed cell rubber foam having a connective gas bubble structure formed by punching the foam surface with a jig having between 100-1200 needles per square centimeter.

### SUMMARY OF THE INVENTION

It is an object of the present invention to solve the aforementioned conventional problems and to provide a sealing member which is improved to have increased air permeability in the vertical direction without increasing the air permeability in the lateral direction.

The sealing member of the present invention is a sealing member to be interposed between parts and which is composed of rubber foam and is characterized in that the ratio of the permeability A in a compressing direction at non-compressed state to the permeability B in a direction perpendicular to the compressing direction at 50% compressed state in the compressing direction, that is A/B, is 1-40.

Since the sealing member according to the present invention has greater permeability in the vertical direction and smaller permeability in the lateral direction, the sealing member has stable air tightness and waterproof. The sound absorption can be controlled by controlling the permeability in the vertical direction.

It should be noted that the permeability in the vertical direction is substantially constant even with variation in compressing ratio while the permeability in the lateral direction varies according to the compressing ratio. In general, the compressing ratio in applications as sealing member extends in a wide range from 5% to 95%. In the present invention, the permeability at 50% compressed state is employed for defining the permeability in the lateral direction because 50% is the average compressing ratio.

In the present invention, it is preferable that the permeability A in the vertical direction at non-compressed state is 30 L/min or less and the permeability B in the lateral direction at 50 % compressed state is 10 L/min or less. In this case, it is further preferable that the ratio of the permeability A in the compressing direction at non-compressed state to the permeability B in the direction perpendicular to the compressing direction at 50% compressed state, that is A/B, is 2-20.

To increase the permeability in the vertical direction, the sealing member is preferably formed with needle holes in the compressing direction. It is preferable that the needle holes are

In the present invention, the gauge of needles of said needle punch is 20-150 needles per square centimeter. In addition, the shank of each needle of the needle punch is 1-3 mm in thickness and the blade of each needle of the needle punch is 0.2-3 mm in thickness.

### BRIEF DESCRIPTION OF THE DRAWINGS

Fig. 1 is an explanatory view of a method of manufacturing sealing members according to an embodiment;
Fig. 2 is an explanatory view of a conventional method of manufacturing sealing members;
Fig. 3a is a front view showing a typical needle, that is a felting needle, Fig. 3b is a sectional view taken along a line B-B in Fig. 3a, Fig. 3c is a sectional view taken along a line C-C in Fig. 3a, and Fig. 3d is a sectional view taken along a line D-D in Fig. 3a;
Fig. 4a is a perspective view showing a sample for measuring the permeability, and Fig. 4b is a sectional view showing a method of measuring the permeability;
Fig. 5 is an explanatory view of a method of measuring the water sealing capability; and
Fig. 6 is a graph showing the result of measuring the sound absorbing coefficient of normal incident sound of Examples 5 through 7 and Comparative Examples 3, 4.

### DESCRIPTION OF THE PREFERRED EMBODIMENTS

Sealing members of the present invention are made of rubber foam such as EPDM (ethylene-propylene-diene-methylene linkage) foam, EVA (ethylene vinyl acetate) foam, and silicone resin foam. The sealing members may be used for the aforementioned various applications. The dimension of each sealing member is not particularly limited, but normally about 1.0 through 100 mm in thickness.

The expansion ratio of the rubber foam is 5-30 times while the expansion ratio of a synthetic resin foam such as urethane foam is 3-40 times.

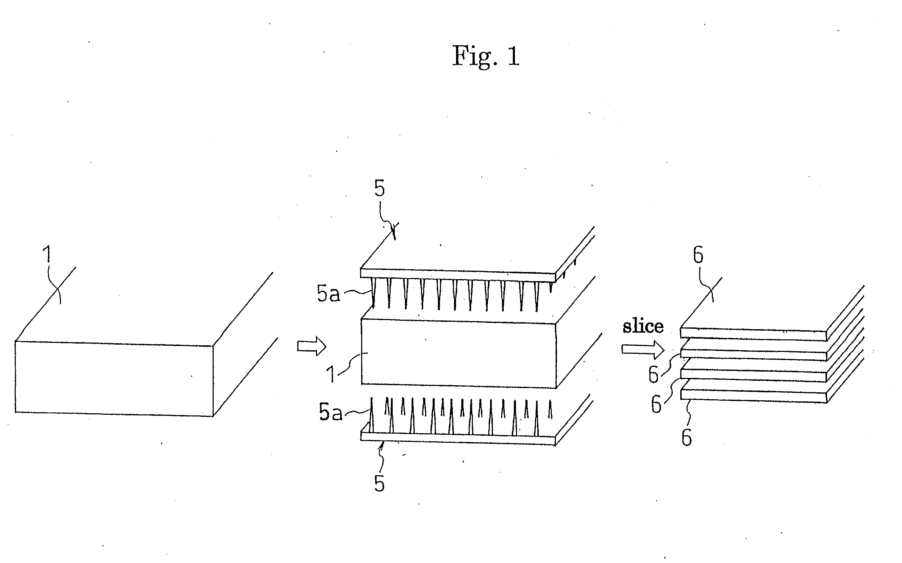

The sealing members preferably have needle holes or apertures formed in the vertical direction by using needle punches, thereby increasing the air permeability in the vertical direction. Fig. 1 is a schematic view showing the process by needle punches 5, 5, in which a foam body 1 is vertically sandwiched between the needle punches 5, 5 and is pierced with needles 5a of the needle punches 5 so as to form needle holes in the vertical direction. After that, the foam body 1 is sliced into a plurality of thin plates as sealing members 6.

The gauge of needles of each needle punch is 20-150 needles per a square centimeter.

In view of the configuration of needles, felting needles are suitably used, regardless of whether the needles have a barb or barbs or not and whether the needles have an intermediate blade or not. In addition, there is no limitation in the configuration of the blades.

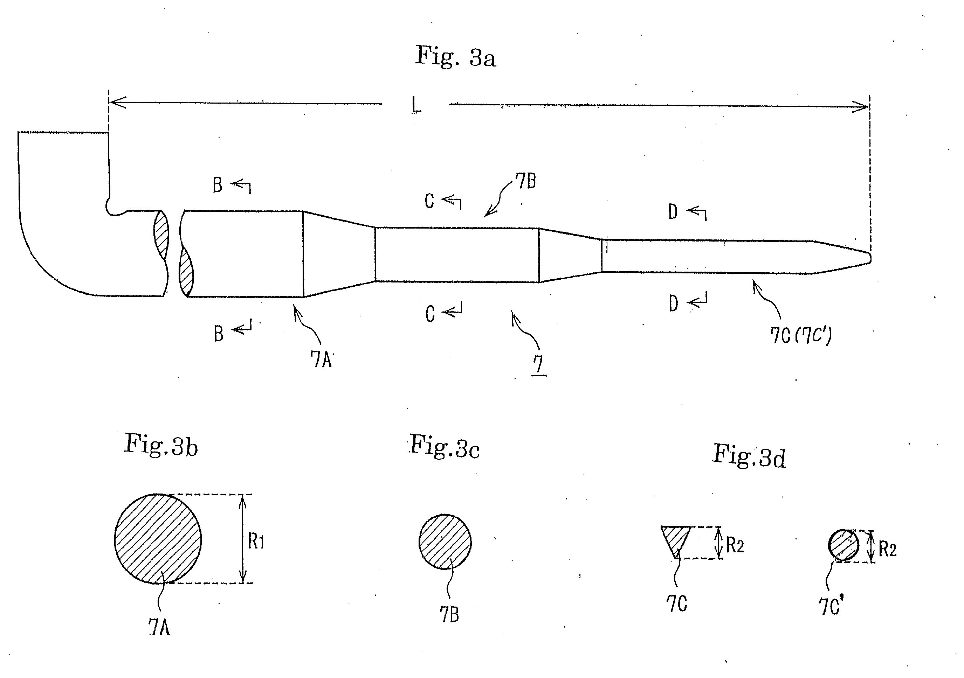

Fig. 3a is a front view showing a typical needle, that is a felting needle, Fig. 3b is a sectional view taken along a line B-B in Fig. 3a, Fig. 3c is a sectional view taken along a line C-C in Fig. 3a, and Fig. 3d is a sectional view taken along a line D-D in Fig. 3a. In Fig. 3d, two examples as the configuration of blades are shown in which one is a triangle rod blade 7C and the other is a cylindrical blade 7C'. The felting needle 7 comprises a shank 7A, a blade 7C (7C'), and an intermediate blade 7B between the shank 7A and the blade 7C (7C').

The thickness of the shank is 1-3 mm and the thickness of the blade is 0.2-3 mm, particularly 0.4-1.8 mm, but the thickness depends on the material of the needle.

The thickness of the shank of the needle is indicated as a diameter R₁ of the shank 7A in Fig. 3b and the thickness of the blade is indicated as a height R₂ of a triangle in section of the blade 7C. In case of a blade 7C' having circular section, the thickness is indicated as a diameter R₂ of the circle. The length of the needle is indicated as a length L from the shank 7A to the blade 7C.

To prevent variation in air permeability, the needle punches are arranged above and below the foam body as shown in Fig. 1 so as to punch the foam body from above and below. During piercing, the upper and lower needle punches may punch the foam body at the same time. Alternatively, the lower needle punch may punch after the upper needle punch. Alternatively, the upper needle punch may punch after the lower needle punch. It should be noted that only upper or lower needle punch may be used.

In the sealing member manufactured as mentioned above, the ratio of the permeability A in the vertical direction at non-compressed state to the permeability B in the lateral direction at 50% compressed state, that is A/B, is 1-40, preferably 2-20, more preferably 5-10. At 30% compressed state, the permeability in the vertical direction is preferably 20-1 times, more preferably 10-1 times, particularly 5-1 times of the permeability in the lateral direction.

The sealing member has preferably the low permeability both in the vertical direction and in the lateral direction when the sealing member is used for sealing air and water tightly. Concretely, it is desirable that the permeability A in the vertical direction is 30 L/min or less and the permeability B in the lateral direction at 50% compressed state is 10 L/min or less.

When requiring extremely high water sealing capability and high air tightness, it is desirable that the permeability is as low as possible. However, to ensure the elastic restoring property of the sealing member, it is preferable that the permeability is 0.01 L/mim or more. Therefore, it is preferable that the permeability A in the vertical direction is 0.1-1.0 L/min and the permeability B in the lateral direction at 50 % compressed state is 0.01-1.0 L/min.

The sealing member according to the present invention may have at least one adhesive tape applied thereto for adhesion. When the permeability in the vertical direction is in the aforementioned range, air can be easily released selectively in the vertical direction during applying an adhesive tape to the sealing member, thereby preventing air from being trapped between the adhesive tape and the foam and speeding up the applying operation. As a result of this, the productivity of the sealing member with the tape is improved and the fraction defective is reduced.

### Example 1

An EPDM foam of 10 x 100 x 100 cm having an expansion ratio of 30 times is processed by needle punching according to the method shown in Fig. 1 and then sliced into a plurality of pieces as sealing members of 1.0 cm in thickness. It should be noted that main conditions are as follows:
Needle: felting needle without barb of cylindrical type;
Gauge of needles: 41 needles / cm²;
Length of needle: 88.9 mm;
Thickness of shank: 1.83 mm; and
Thickness of blade: 0.7 mm.

Characteristics of the sealing member manufactured under the above conditions are shown in Table 1.

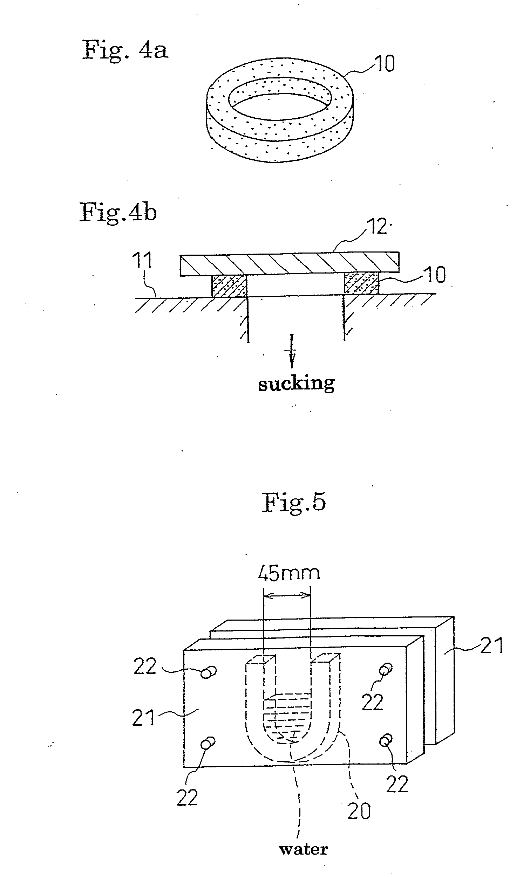

The measurement of permeability of the sealing member was conducted according to JIS K 6400. Concretely, the permeability B in the lateral direction at 50 % compressed state was measured by the following steps: cutting out a ring-shaped sample 10 as shown in Fig. 4a; compressing and keeping the sample 10 at 50 % compressed state between a supporting board 11 and an acrylic board 12 as shown in Fig. 4b; and sucking a central area of the sample. The sample has a thickness of 10 mm, an inner diameter of 60 mm, and an outer diameter of 80 mm.

The permeability A in the vertical direction at non-compressed state was measured by the following steps: cutting out a sample of 10 mm x 100 mm x 100 mm; disposing the sample on an inlet of a vacuum chamber in such a manner as to close the inlet; and sucking the inside of the vacuum chamber.

The water sealing capability of the sealing member under the hydrostatic pressure was measured as shown in Fig. 5.

That is, a sample 20 was prepared by punching the sealing member into a U-like shape. The sample 20 was sandwiched between two acrylic boards 21, 21 and retained by bolts 22 in such a manner that the sample 20 was compressed to have 50%, 70%, or 80% thickness of the initial or original thickness. After left for 24 hours, water was poured from the top to have maximum depth of 100 mm and the water leakage was observed visually.

The result of measurement of water sealing capability is also shown in Table 1.

In addition, Table 1 indicates load for compressing the sample into 50% compressed state.

### Comparative Example 1a

Sealing members were manufactured in the same manner as Example 1, except that an urethane foam having an expansion ratio of 10 times was used instead of the EPDM foam and processed under the following conditions of needle punching.
Needle: felting needle without barb of cylindrical type;
Gauge of needles: 46 needles / cm²;
Length of needle: 76.2 mm;
Thickness of shank: 1.83 mm; and
Thickness of blade: 1.0 mm.

The characteristics of the sealing members were evaluated. The results are shown in Table 1.

### Example 3

Sealing members were manufactured in the same manner as Example 1, except that an EPDM foam having an expansion ratio of 13 times was used and processed under the following conditions of needle punching.
Needle: felting needle without barb of triangle rod type;
Gauge of needles: 91 needles / cm²;
Length of needle: 88.9 mm;
Thickness of shank: 1.83 mm; and
Thickness of blade: 0.7 mm.

The characteristics of the sealing members were evaluated. The results are shown in Table 1.

### Example 4

Sealing members were manufactured in the same manner as Example 1, except that an EPDM foam having an expansion ratio of 13 times was used and processed under the following conditions of needle punching.
Needle: felting needle without barb of cylindrical type;
Gauge of needles: 73 needles / cm²;
Length of needle: 76.2 mm;
Thickness of shank: 1.83 mm; and
Thickness of blade: 1.0 mm.

The characteristics of the sealing members were evaluated. The results are shown in Table 1.

### Comparative Examples 1, 2

The same urethane and EPDM foams as used in Examples 2, 3 were processed by roll crushing shown in Fig. 2, thereby manufacturing sealing members. The characteristics of the sealing members were evaluated. Three pairs of rolls were provided, the diameter of each roll was 100 mm, and the feeding speed was 8 m/min. The first clearance between rolls was 8 mm, the second clearance was 6 mm, and the third clearance was 3 mm. The results are shown in Table 1.

### Examples 5 through 7

Sealing members were manufactured in the same manner as Example 1, except that an EPDM foam having an expansion ratio of 13 times was used and processed under the needle punching conditions as shown in Table 1. The characteristics of the sealing members were evaluated. The results are shown in Table 1.

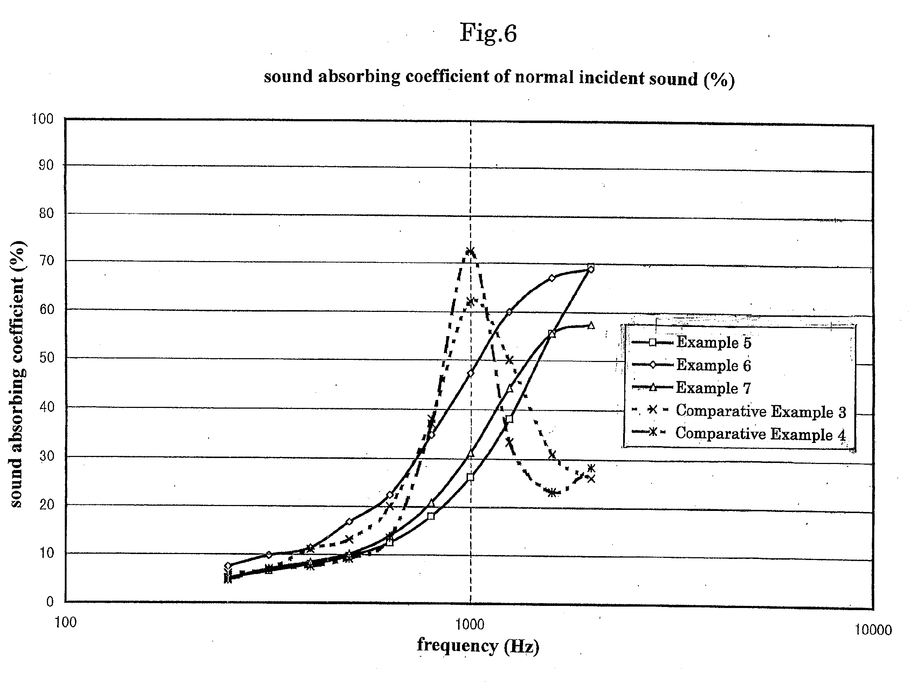

As for each of Examples 5 through 7, the sound absorbing coefficient of normal incident sound was also measured and the results are shown in Fig. 6.

### Comparative Example 3

The same EPDM foam as used in Example 5 was processed by roll crushing in the same manner as Comparative Example 1, thereby manufacturing sealing members. The characteristics of the sealing members were evaluated and the results are shown in Table 1. In addition, the sound absorbing coefficient of normal incident sound was measured and the result is shown in Fig. 6.

### Comparative Example 4

The same EPDM foam as used in Example 5 was not processed by any method of breaking cells so as to remain all closed cells. The characteristics were evaluated and the results are shown in Table 1. In addition, the sound absorbing coefficient of normal incident sound was measured and the result is shown in Fig. 6.

**Table 1**

| | material (expansion ratio) | condition of needle punch | | | | Permeability (L/min) | | | Water sealing capability | 50% compression load (Pa) |
|---|---|---|---|---|---|---|---|---|---|---|
| | | Gauge of needles (needles/cm²) | Length of needles (mm) | Thickness of shank (mm) | Thickness of blade (mm) | vertical direction A | lateral direction at 50% compressed state B | A/B | | |
| Example 1 | EPDM foam A (30 times) | 41 | 88.9 | 1.83 | 0.7 | 1.4 | 0.08 | 17.5 | very good | 1764 |
| Comparative Example 1a | urethane foam A (10 times) | 46 | 76.2 | 1.83 | 1.0 | 1.6 | 0.05 | 32.2 | very good | 5978 |
| Example 3 | EPDM foam C (13 times) | 91 | 88.9 | 1.83 | 0.7 | 1.4 | 0.18 | 7.8 | very good | 5782 |
| Example 4 | EPDM foam D (13 times) | 73 | 76.2 | 1.83 | 1.0 | 3.8 | 0.3 | 12.7 | very good | 5586 |
| Comparative Example 1 | EPDM foam A (13 times) | by roll crushing | | | | 0.08 | 0.46 | 0.17 | good | 4704 |
| Comparative Example 2 | urethane foam B (10 times) | by roll crushing | | | | 0.3 | 0.6 | 0.5 | good | 6370 |
| Example 5 | EPDM foam E (13 times) | 64 | 101.6 | 1.83 | 0.9 | 7.97 | 0.253 | 31.5 | very good | 5978 |
| Example 6 | EPDM foam E (13 times) | 52 | 101.6 | 1.83 | 0.9 | 5.06 | 0.322 | 15.7 | very good | 4802 |
| Example 7 | EPDM foam E (13 times) | 81 | 101.6 | 1.83 | 0.9 | 2.68 | 0.184 | 14.6 | very good | 7938 |
| Comparative Example 3 | EPDM foam E (13 times) | by roll crushing | | | | 0.1 | 0.5 | 0.2 | good | 2646 |
| Comparative Example 4 | EPDM foam E (13 times) | No method of beaking cells was processed | | | | measurement was impossible | | | good | - |

### INDUSTRIAL APPLICABILITY

As apparent from the aforementioned examples and comparative examples, the present invention can provide a sealing member having low permeability in the direction perpendicular to the compressing direction and having excellent water sealing capability and sound absorption. The sealing member has increased permeability in the compressing direction and can be elastically deformed in the compressing direction at an increased rate.

## Claims

1. A sealing member (6) to be interposed between parts, said sealing member (6) being composed of rubber foam and is formed with needle holes in a compressing direction, the needle holes being formed by at least one needle punch (5) having a shank (7A) of between 1 mm and 3mm in thickness and a blade (7C, 7C') of between 0.2mm and 3mm in thickness;
**characterised in that**:
the at least one needle punch (5) having a gauge of between 20 and 150 needles per square centimeter;
and **in that**:
the sealing member (6) has a ratio (A/B) of the permeability A in the compressing direction in a non-compressed state to the permeability B in a direction perpendicular to the compressing direction at a 50% compressed state in the compressing direction is between 1 and 40.

2. A sealing member (6) as claimed in claim 1, wherein the permeability A in the compressing direction at non-compressed state is 30 L/min or less and the permeability B in the direction perpendicular to the compressing direction at 50 % compressed state is 10 L/min or less.

3. A sealing member (6) as claimed in claim 1 or 2, wherein the ratio (A/B) is between 2 and 20.

4. A sealing member (6) as claimed in claim 3, wherein the ratio (A/B) is between 5 and 10.

## Patentansprüche

1. Dichtungselement (6) zum Einsetzen zwischen Teilen, wobei das Dichtungselement (6) aus Kautschukschaum besteht und in eine Komprimierungsrichtung mit Stichlöchern gebildet ist, wobei die Stichlöcher von mindestens einem Nadelstempel (5) gebildet sind, der einen Kolben (7A) mit einer Dicke zwischen 1 mm und 3 mm und einen Schaft (7C, 7C') mit einer Dicke zwischen 0,2 mm und 3 mm aufweist,
**dadurch gekennzeichnet, dass**:
der mindestens eine Nadelstempel (5) eine Besatzdichte zwischen 20 und 150 Nadeln/cm² aufweist
und dadurch, dass:
das Dichtungselement (6) ein Verhältnis (A:B) der Durchlässigkeit A in Komprimierungsrichtung in einem nicht komprimierten Zustand zur Durchlässigkeit B in einer Richtung senkrecht zur Komprimierungsrichtung in einem in der Komprimierungsrichtung zu 50 % komprimierten Zustand zwischen 1 und 40 aufweist.

2. Dichtungselement (6) nach Anspruch 1, wobei die Durchlässigkeit A in Komprimierungsrichtung in einem nicht komprimierten Zustand 30 l/min oder weniger und die Durchlässigkeit B in der Richtung senkrecht zur Komprimierungsrichtung in zu 50 % komprimiertem Zustand 10 l/min oder weniger beträgt.

3. Dichtungselement (6) nach Anspruch 1 oder 2, wobei das Verhältnis (A:B) zwischen 2 und 20 beträgt.

4. Dichtungselement (6) nach Anspruch 3, wobei das Verhältnis (A:B) zwischen 5 und 10 beträgt.

## Revendications

1. Élément d'étanchéité (6) à interposer entre des pièces, ledit élément d'étanchéité (6) étant composé de caoutchouc mousse et est formé avec des trous d'aiguille dans une direction de compression, les trous d'aiguille étant formés par au moins un poinçon à aiguilles (5) ayant un talon (7A) d'une épaisseur entre 1 mm et 3 mm et une tige (7C, 7C') d'une épaisseur entre 0,2 mm et 3 mm, **caractérisé en ce que** le au moins un poinçon à aiguilles (5) a une jauge entre 20 et 150 aiguilles par centimètre carré, et **en ce que** l'élément d'étanchéité (6) a un rapport (A/B) de la perméabilité A dans la direction de compression dans un état non compressé à la perméabilité B dans une direction perpendiculaire à la direction de compression dans un état compressé à 50 % dans la direction de compression est compris entre 1 et 40.

2. Élément d'étanchéité (6) tel que revendiqué dans la revendication 1, dans lequel la perméabilité A dans la direction de compression à l'état non compressé est de 30L/min ou moins et la perméabilité B dans la direction perpendiculaire à la direction de compression à l'état compressé à 50 % est de 10 L/min ou moins.

3. Élément d'étanchéité (6) tel que revendiqué dans la revendication 1 ou 2, dans lequel le rapport (A/B) est compris entre 2 et 20.

4. Élément d'étanchéité (6) tel que revendiqué dans la revendication 3, dans lequel le rapport (A/B) est compris entre 5 et 10.
